# EUROPÄISCHE PATENTSCHRIFT

(11) **EP 1 141 575 B1**
(45) Veröffentlichungstag und Bekanntmachung des Hinweises auf die Patenterteilung: **16.07.2003**
(21) Anmeldenummer: 99965490.8
(22) Anmeldetag: 17.12.1999
(51) Int. Cl.: F16D 65/56, F16D 65/16

(54) **BETÄTIGUNGSVORRICHTUNG MIT SELBSTTÄTIGER NACHSTELLUNG FÜR EINE HYDRAULISCHE FAHRZEUGSCHEIBENBREMSE**
ACTUATING DEVICE HAVING AUTOMATIC ADJUSTMENT FOR A HYDRAULIC VEHICLE DISC BRAKE
DISPOSITIF D'ACTIONNEMENT A AJUSTAGE AUTOMATIQUE, DESTINE A UN FREIN A DISQUE HYDRAULIQUE DE VEHICULE

(30) Priorität: 18.12.1998 DE 19858651
(43) Veröffentlichungstag der Anmeldung: 10.10.2001
(73) Patentinhaber: LUCAS INDUSTRIES PUBLIC LIMITED COMPANY, Solihull B90 4LA (GB)
(72) Erfinder: RUNKEL, Klaus, D-56566 Neuwied (DE); WAGNER, Lothar, D-56414 Steinefrenz (DE); MILLER, Len, Droitwich WOC. WR9 7QP (GB)
(74) Vertreter: Beyer, Andreas, Dr.
(86) Internationale Anmeldenummer: EP9910087
(87) Internationale Veröffentlichungsnummer: WO00037820

(56) Entgegenhaltungen:
- EP-A- 0 396 231
- EP-B- 0 403 635
- WO-A-91/10841

## Beschreibung

Die Erfindung betrifft eine Betätigungsvorrichtung mit selbsttätiger Nachstellung für eine hydraulische Fahrzeugscheibenbremse gemäß dem Oberbegriff des Anspruchs 1. Eine solche Betätigungsvorrichtung ist aus der EP 0 403 635 B1 bekannt.

Betätigungsvorrichtungen dieser Art werden in Fahrzeugscheibenbremsen verwendet, die auch als Feststellbremse (Parkbremse) benutzbar sein sollen. Zusätzlich zu der hydraulischen Betätigungsmöglichkeit ist deshalb eine üblicherweise mechanische Betätigungsmöglichkeit der Bremse vorhanden, die eine vorzugsweise selbsttätig arbeitende Nachstelleinrichtung umfaßt, so daß der zum mechanischen Festspannen der Bremse notwendige Betätigungsweg auch bei sich abnutzenden Bremsbelägen nicht ungebührlich lang wird. Diese Nachstelleinrichtung umfaßt bei der eingangs genannten Betätigungsvorrichtung ein erstes, im wesentlichen hülsenförmiges Strebenteil, in das ein zweites Strebenteil mit einem bolzenförmigen Ende hineingeschraubt ist. Beide Strebenteile bilden so eine längeneinstellbare Nachstellstrebe.

Beim Befüllen dieser Betätigungsvorrichtung mit Bremsflüssigkeit muß letztere auch in einen Hohlraum gelangen, der in dem hülsenförmigen Strebenteil auf seiner Stirnseite durch eine flüssigkeitsdichte Wand und auf der gegenüberliegenden, anderen Seite durch das bolzenförmige Ende des zweiten Strebenteiles begrenzt ist. Bei der bekannten Betätigungsvorrichtung gelangt die Bremsflüssigkeit durch die Gewindepaarung zwischen dem bolzenförmigen Ende des zweiten Strebenteiles und dem hülsenförmigen ersten Strebenteil in den genannten Hohlraum. Die Gewindepaarung weist zu diesem Zweck ein gewisses axiales Spiel auf, das der Bremsflüssigkeit den Durchtritt gestattet.

Um den bei einer Betätigung der Feststellbremse zu überwindenden Leerweg möglichst klein zu halten, ist grundsätzlich ein möglichst geringes Gewindespiel wünschenswert. Dieses birgt jedoch die Gefahr einer schlechten Entlüftbarkeit des genannten Hohlraums beim Befüllen der Betätigungsvorrichtung mit Bremsflüssigkeit, so daß der Hohlraum unter Umständen nicht vollständig mit Bremsflüssigkeit gefüllt wird, was dann wiederum einen vergrößerten Leerweg beim hydraulischen Betätigen zur Folge hat.

Der Erfindung liegt die Aufgabe zugrunde, eine Betätigungsvorrichtung der genannten Art so zu verbessern, daß trotz eines möglichst geringen Gewindespiels der aus dem ersten und dem zweiten Strebenteil bestehenden Nachstellstrebe eine einwandfreie, d.h. eine vollständige Befüllung des genannten Hohlraumes möglich ist.

Diese Aufgabe ist erfindungsgemäß durch eine Betätigungsvorrichtung gelöst, die die im Patentanspruch 1 angegebenen Merkmale aufweist. Das hülsenförmige Strebenteil, das mit einem konischen Flansch am Bremskolben anliegt, weist demnach im Bereich des Hohlraumes mehrere radiale Bohrungen auf, die den Hohlraum mit der Außenumfangsfläche des hülsenförmige Strebenteiles verbinden. Darüber hinaus weist das hülsenförmige Strebenteil in seinem konischen Flansch mehrere axiale Durchgangsbohrungen auf, die derart zueinander angeordnet sind, daß bei jeder beliebigen Drehstellung des hülsenförmigen Strebenteiles relativ zum Gehäuse der Betätigungsvorrichtung das radial äußere Ende zumindest einer radialen Bohrung, die sich oberhalb einer horizontal durch die Mittelachse der Betätigungsvorrichtung verlaufenden Bezugsebene befindet, unterhalb zumindest eines Teils wenigstens einer axialen Durchgangsbohrung in dem konischen Flansch liegt. Auf diese Weise besteht immer eine oberhalb des Flüssigkeitsspiegels in der Betätigungsvorrichtung liegende Fluidverbindung zwischen dem Hohlraum und der Zylinderbohrung, in der der Bremskolben verschieblich angeordnet ist, so daß beim Befüllen der Betätigungsvorrichtung mit Bremsflüssigkeit Luft aus dem Hohlraum in die Zylinderbohrung herausgedrückt werden kann und eine vollständige Befüllung des Hohlraumes mit Bremsflüssigkeit sichergestellt ist. Der Zufluß von Bremsflüssigkeit in den Hohlraum erfolgt durch die sich unterhalb der genannten horizontalen Bezugsebene befindenden axialen Durchgangsbohrungen und radialen Bohrungen im hülsenförmigen Strebenteil.

Erfindungsgemäß muß also bei der Wahl des Spiels der Gewindepaarung zwischen dem ersten und dem zweiten Strebenteil nicht mehr darauf geachtet werden, daß ein ungehinderter Durchtritt von Bremsflüssigkeit bzw. Luft gewährleistet ist. Vielmehr kann dieses Gewindespiel in Richtung eines möglichst kleinen Leerweges bei mechanischer Betätigung optimiert werden.

Bei einer bevorzugten Ausführungsform der erfindungsgemäßen Betätigungsvorrichtung sind im hülsenförmigen Strebenteil wenigstens drei radiale Bohrungen und drei axiale Durchgangsbohrungen vorhanden, die jeweils in Umfangsrichtung gleichmäßig voneinander beabstandet sind. Bei einem anderen Ausführungsbeispiel sind vier radiale Bohrungen und sechs axiale Durchgangsbohrungen vorhanden, die ebenfalls gleichmäßig in Umfangsrichtung verteilt sind.

Vorzugsweise ist der Zahlenwert des Verhältnisses des Volumens des genannten Hohlraumes zur Querschnittsfläche jeder axialen Durchgangsbohrung und auch der Zahlenwert des Verhältnisses des Volumens des Hohlraumes zur Querschnittsfläche jeder radialen Bohrung nicht größer als 1000. Zumindest muß die Querschnittsfläche jeder radialen Bohrung und jeder axialen Durchgangsbohrung so groß sein, daß die entsprechende Öffnung nicht durch Flüssigkeitstropfen versperrt werden kann, die sich aufgrund der Oberflächenspannung der benutzten Flüssigkeit bilden. Ist der Zahlenwert der genannten Verhältnisse ≤ 1000, dann kann der genannte Hohlraum auch mit einem relativ niedrigen Befüllungsdruck, beispielsweise einem Druck von bis zu 6 bar, in annehmbarer Zeit vollständig mit Bremsflüssigkeit befüllt werden.

Wenn die erfindungsgemäße Betätigungsvorrichtung eine Federscheibenanordnung aufweist, die sich axial zwischen einem Sicherungsring und dem konischen Flansch des hülsenförmigen Strebenteiles abstützt, dann hat der Sicherungsring vorzugsweise einen die Strömung von Bremsflüssigkeit in den Hohlraum und von Luft aus dem Hohlraum möglichst wenig behindernden Querschnitt, der beispielsweise rund sein kann. Die Federscheibenanordnung, die beim genannten Stand der Technik zusammen mit einem Sicherungsring von rechteckigem Querschnitt verwendet wird, hält normalerweise den konischen Flansch am entsprechenden Innenkonus des Bremskolbens und verhindert dadurch eine Drehung des hülsenförmigen Strebenteiles relativ zum Bremskolben.

Wenn die erfindungsgemäße Betätigungsvorrichtung eine Rückstellfeder umfaßt, die zwischen der zum mechanischen Zuspannen des Bremskolbens erforderlichen Spreizeinrichtung und einem angenähert topfförmigen Federkäfig eingespannt ist, dann weist dieser Federkäfig im Bereich seines Bodens vorzugsweise mehrere Durchgangsöffnungen auf, um eine Durchströmung von Bremsflüssigkeit und Luft möglichst wenig zu behindern. Die genannte Rückstellfeder dient unter anderem zum Vorspannen der Spreizeinrichtung in ihre Ruhelage.

Durch die erfindungsgemäße Betätigungsvorrichtung wird auch eine verbesserte Fahrzeugscheibenbremse mit Feststellfunktion bereitgestellt, deren Leerweg beim Betätigen der mechanischen Feststellfunktion sehr niedrig gehalten werden kann.

Zwei Ausführungsbeispiele einer erfindungsgemäßen Betätigungsvorrichtung werden im folgenden anhand der beigefügten, schematischen Figuren näher erläutert. Es zeigt:
- Fig. 1: im Längsschnitt eine erfindungsgemäße Betätigungsvorrichtung, eingebaut in eine Fahrzeugscheibenbremse,
- Fig. 2: die Draufsicht auf ein hülsenförmiges Strebenteil der in Fig. 1 wiedergegebenen Betätigungsvorrichtung teilweise im Schnitt, und
- Fig. 3: eine der Fig. 2 entsprechende Ansicht eines abgewandelten hülsenförmigen Strebenteiles.

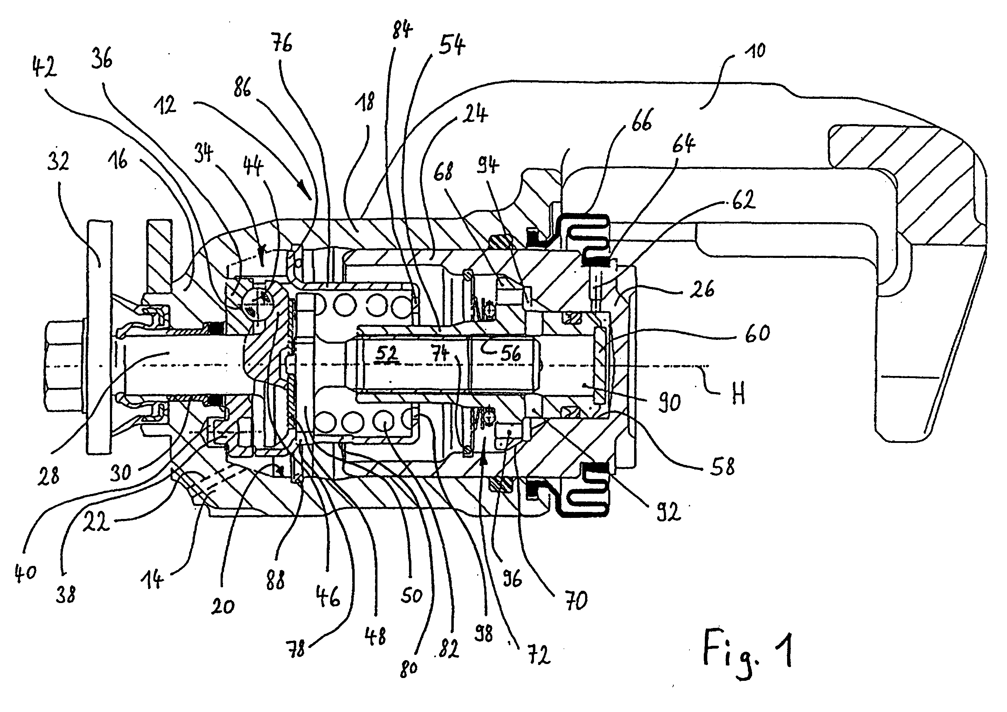

Figur 1 zeigt eine sogenannte Teilbelag-Scheibenbremse mit einem Schwimmsattel 10, der an einem nicht gezeigten Bremsträger in üblicher Weise parallel zur Achse einer ebenfalls nicht dargestellten Bremsscheibe verschiebbar geführt ist. In dem Schwimmsattel 10 ist eine allgemein mit 12 bezeichnete Betätigungsvorrichtung aufgenommen, mit der die hier nicht gezeigten Reibbeläge, auch Bremsbeläge genannt, gegen die Bremsscheibe gepreßt werden können.

Zur Betätigungsvorrichtung 12 gehört ein Gehäuse 14, das hier einstückig mit dem Schwimmsattel 10 ausgebildet ist und das einen Gehäuseboden 16 und einen Gehäusemantel 18 aufweist. In dem Gehäuse 14 ist eine zur nicht dargestellten Bremsscheibe hin offene Zylinderbohrung 20 ausgebildet, die durch einen gestrichelt wiedergegebenen Einlaßkanal 22 mit Bremsflüssigkeit versorgt werden kann. In der Zylinderbohrung 20 ist ein becherförmiger Kolben 24 verschiebbar geführt, dessen geschlossene Stirnwand 26 zur Anlage an den einen der nicht dargestellten Bremsbeläge bestimmt ist.

Im Gehäuseboden 16 ist gleichachsig mit dem Kolben 24 eine Welle 28 in einer Lagerbüchse 30 drehbar und axial verschiebbar gelagert. Mit dieser Welle 28 ist die Betätigungsvorrichtung 12 mechanisch betätigbar. Am äußeren Ende der Welle 28 ist hierzu ein Hebel 32 befestigt, der beispielsweise mittels eines Bowdenzugs mit einem Feststellbremshebel oder einem Feststellbremspedal verbunden ist.

An der Innenseite des Gehäusebodens 16 liegt eine hier als Kugelrampenanordnung 34 ausgeführte Spreizeinrichtung mit einer ringscheibenförmigen Platte 36 an, die auf die Welle 28 aufgeschoben und an ihr zentriert ist. Diese Platte 36 ist durch einen Zapfen 38, der in ein achsparalleles Sackloch 40 im Gehäuseboden 16 eingreift, am Gehäuse 14 gegen Drehen gesichert.

An der gehäusefesten Platte 36 sind drei im Umfangsrichtung langgestreckte, wannenartige Rampen 42 ausgebildet, die je einen hier kugelförmigen Spreizkörper 44 aufnehmen. Die Spreizkörper 44 wirken mit je einer entsprechenden Rampe einer weiteren, ebenfalls ringscheibenförmigen Platte 46 zusammen, die axial verstellbar ist und die im dargestellten Ausführungsbeispiel einstückig mit der Welle 28 ausgeführt ist. Die axial verstellbare Platte 46 stützt sich in axialer Richtung gegen einen von den Spreizkörpern 44 ausgeübten Druck über ein Axialdrucklager 48 an einem Widerlager 50 ab, das Teil einer längenveränderbaren Nachstellstrebe ist.

Die Nachstellstrebe besteht aus einem ersten, bolzenförmigen Strebenteil 52, das beim gezeigten Ausführungsbeispiel einstükkig mit dem Widerlager 50 ausgeführt ist, und einem zweiten, im wesentlichen hülsenförmigen Strebenteil 54, in das das erste Strebenteil 52 eingeschraubt ist. Hierzu befindet sich zwischen den beiden Strebenteilen 52 und 54 eine selbsthemmungsfreie Steilgewindepaarung 56. Wie später noch erläutert werden wird, vergrößert sich die wirksame Länge der durch die beiden Strebenteile 52 und 54 gebildeten Nachstellstrebe, die gleichachsig zu dem Kolben 24 und der Welle 28 angeordnet ist, entsprechend dem allmählich fortschreitenden Belagverschleiß der nicht dargestellten Bremsbeläge. Das hülsenförmige Strebenteil 54 ist in seinem in Fig. 1 rechten Endabschnitt als Hilfskolben ausgebildet und in einer entsprechenden Hilfszylinderbohrung 58 des Kolbens 24 verschiebbar geführt.

Das der Stirnwand 26 des Kolbens 24 zugewandte Ende des hülsenförmigen Strebenteiles 54 ist durch eine Bodenplatte 60 dicht verschlossen. Der durch diese Bodenplatte 60 und die Stirnwand 26 begrenzte Teil der Hilfszylinderbohrung 58 ist, damit er stets drucklos bleibt, durch einen radialen Entlüftungskanal 62 mit einer äußeren Nut 64 des Kolbens 24 verbunden. In der Nut 64 ist ein Ende eines Faltenbalges 66 aufgenommen, der das aus der Zylinderbohrung 20 herausragende Ende des Kolbens 24 mit dem Gehäuse 14 verbindet und dadurch die Zylinderbohrung 20 vor Verschmutzung schützt.

An dem hülsenförmigen Strebenteil 54 ist ein konischer Flansch 68 ausgebildet, dem ein Innenkonus 70 des Kolbens 24 zugeordnet ist. Innerhalb des Kolbens 24 ist eine Federscheibenanordnung 72 mit axialer Vorspannung zwischen dem Flansch 68 und einem in den Kolben 24 eingerasteten Sicherungsring 74 angeordnet. Die Federscheibenanordnung 72 hält normalerweise den Flansch 68 am Innenkonus 70 anliegend und verhindert dadurch eine Drehung des hülsenförmigen Strebenteiles 54 relativ zum Kolben 24. Der Kolben 24 ist seinerseits durch übliche Mittel, beispielsweise durch sein Zusammenwirken mit dem nicht dargestellten Bremsbelag, daran gehindert, sich zu drehen.

Innerhalb der Zylinderbohrung 20 - und weitgehend innerhalb des becherförmigen Kolbens 24 - ist ein näherungsweise topfförmiger Federkäfig 76 angeordnet, der am Gehäuse 14 gegen Axialverschiebung und gegen Drehung festgelegt ist. Der Federkäfig 76 ist dabei so gestaltet, daß er das bolzenförmige Strebenteil 52 gegen Drehen sichert, ohne es an einer Axialverschiebung zu hindern. Hierzu greift ein radialer Vorsprung 78 des Widerlagers 50 in eine Längsnut 80 des Federkäfigs 76 ein.

Auf der vom Axialdrucklager 48 abgewandten Seite des Widerlagers 50 stützt sich eine hier schraubenförmig ausgebildete Rückstellfeder 82 mit ihrem einen Ende ab, während sich ihr anderes Ende in dem Federkäfig 76 an dessen Boden 84 abstützt. Die Rückstellfeder 82 ist zwischen dem Boden 84 des Federkäfigs 76 und dem Widerlager 50 eingespannt und drückt die Kugelrampenanordnung 34 in ihre Ruhestellung, in der die beiden Platten 36 und 46 den geringsten axialen Abstand voneinander haben.

Der Federkäfig 76 hat einen radial nach außen stehenden Fußrand 86, der ein in die Zylinderbohrung 20 eingerastetes, radial federndes Befestigungselement 88 hintergreift. Der Federkäfig 76 drückt demnach über die Rückstellfeder 82, das Widerlager 50, das Axialdrucklager 48 und die verstellbare Platte 46 sowie die Spreizkörper 44 gegen die Platte 36, so daß letztere an einer axialen Verschiebung vom Gehäuseboden 16 weg gehindert ist.

Im folgenden wird die Funktion der Betätigungsvorrichtung 12 erläutert. Bei einer hydraulischen Bremsbetätigung mit mäßigem Druck, durch den der Schwimmsattel 10 und das Reibmaterial der Bremsbeläge nicht nennenswert verformt werden, wird der Kolben 24 in Richtung zur nicht dargestellten Bremsscheibe hin verschoben, d.h. aus der Zylinderbohrung 20 heraus. Solange diese Verschiebung nicht größer ist als das in der Steilgewindepaarung 56 zwischen den Strebenteilen 52 und 54 bestehende Gewindespiel, das dem vorgesehenen Bremslüftspiel entspricht, macht das hülsenförmige Strebenteil 54 die Verschiebung des Kolbens 24 vollständig mit und die Federscheibenanordnung 72 gibt noch nicht nach.

Wenn jedoch infolge einer Abnutzung der Bremsbeläge ein über das vorgesehene Bremslüftspiel hinausgehender Weg des Kolbens 24 erforderlich ist, um die Bremsbeläge an die Bremsscheibe anzulegen, dann hindert das durch Rückstellfeder 82 festgehaltene bolzenförmige Strebenteil 52 das hülsenförmige Strebenteil 54 daran, bei hydraulischer Betätigung die gesamte Verschiebung des Kolbens 24 zur Bremsscheibe hin mitzumachen. Infolgedessen wird der konische Flansch 68 des hülsenförmigen Strebenteils 54 gegen den Widerstand der Federscheibenanordnung 72, der schwächer als die Vorspannung der Rückstellfeder 82 ist, vom Innenkonus 70 des Kolbens 24 etwas abgehoben. Das hülsenförmige Strebenteil 54 ist nun an einer Drehung um seine Achse nicht mehr gehindert.

Die von der Steilgewindepaarung 56 übertragene Axialkraft, mit der das bolzenförmige Strebenteil 52 versucht, das hülsenförmige Strebenteil 54 zurückzuhalten, hat eine Umfangskomponente und erzeugt deshalb ein Drehmoment, durch welches das hülsenförmige Strebenteil 54 nun so gedreht wird, daß es sich etwas vom bolzenförmigen Strebenteil 52 abschraubt. Der konische Flansch 68 kommt daher am Innenkonus 70 des Kolbens 24 wieder zum Anliegen. Weil die wirksame Länge der durch die beiden Strebenteile 52 und 54 gebildeten Nachstellstrebe nun vergrößert ist, kann der Kolben 24 nach der Bremsbetätigung nicht mehr in seine ursprüngliche Ausgangsstellung zurückkehren, so daß das Bremslüftspiel wieder auf seinen Sollwert verkleinert worden ist.

Wenn die Bremse mechanisch betätigt werden soll, beispielsweise für eine Feststellbremsung, dann wird die Welle 28 mittels des Hebels 32 gedreht. Die kugelförmigen Spreizkörper 44 laufen daraufhin die Rampen 42 der beiden Platten 36 und 46 hoch und drücken die verstellbare Platte 46 axial in Richtung der nicht dargestellten Bremsscheibe. Dabei übt die Platte 46 über das Axialdrucklager 48 eine axiale Druckkraft auf das Widerlager 50 und damit auf das bolzenförmige Strebenteil 52 aus, die von der Steilgewindepaarung 56 nach Überwindung des Gewindespiels auf das hülsenförmige Strebenteil 54 und von diesem über den konischen Flansch 68 und den Innenkonus 70 auf den Kolben 24 übertragen wird. Das hülsenförmige Strebenteil 54 ist dabei an einer Drehung gehindert, so daß die beiden Strebenteile 52 und 54 bei einer mechanischen Betätigung eine vollständig starre Strebe bilden.

Damit die Betätigungsvorrichtung 12 hydraulisch betätigt werden kann, muß zunächst ihr Innenraum mit Bremsflüssigkeit befüllt werden. Dies geschieht durch den bereits erwähnten Einlaßkanal 22. Wichtig ist, daß diese Befüllung mit Bremsflüssigkeit möglichst vollständig erfolgt, da in der Betätigungsvorrichtung 12 zurückbleibende, mit Luft gefüllte Hohlräume im späteren Betrieb zu einer spürbaren Betätigungswegverlängerung während einer hydraulischen Betätigung führen, weil zunächst diese "Luftblasen" zusammengedrückt werden müssen, bevor es möglich ist, den Druck in der Betätigungsvorrichtung auf das zum Bremsen gewünschte Maß zu erhöhen.

Damit die Bremsflüssigkeit den Innenraum der Betätigungsvorrichtung 12 möglichst vollständig ausfüllen kann und insbesondere in einen Hohlraum 90 gelangen kann, der im hülsenförmigen Strebenteil 54 zwischen dem Ende des bolzenförmigen Strebenteils 52 und der Bodenplatte 60 gebildet ist, ist das hülsenförmige Strebenteil 54 im Bereich des Hohlraumes 90 mit mehreren radialen Bohrungen 92 versehen, die den Hohlraum 90 mit der Außenumfangsfläche des hülsenförmigen Strebenteils 54 verbinden. Die radialen Bohrungen 92 münden außen am hülsenförmigen Strebenteil 54 in einen Ringkanal 94, der wie dargestellt vom Strebenteil 54, seinem konischen Flansch 68 und der Innenseite des Kolbens 24 begrenzt ist.

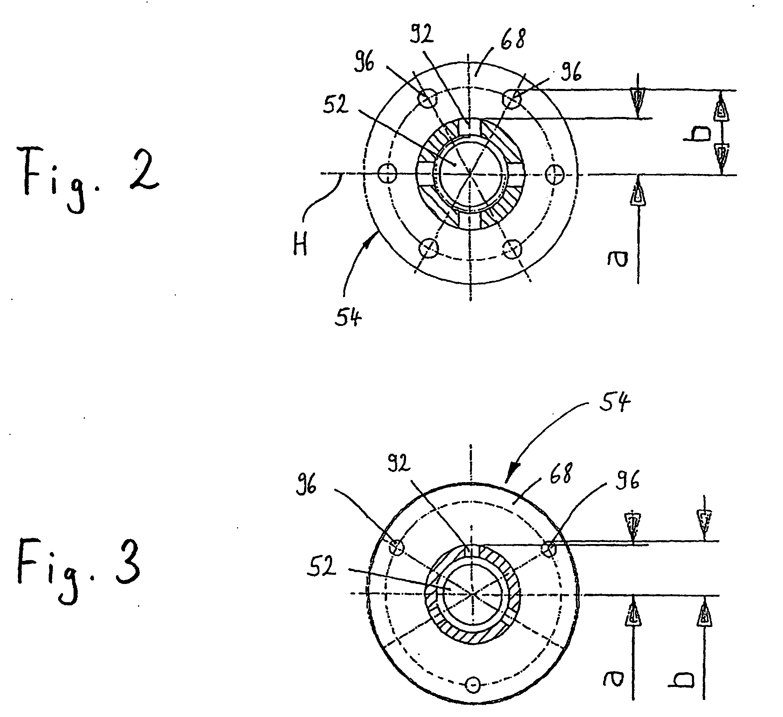

Zur Verbindung des Ringkanals 94 mit der Zylinderbohrung 20 sind in dem konischen Flansch 68 mehrere axiale Durchgangsbohrungen 96 angeordnet. Damit die im Hohlraum 90 enthaltene Luft durch die einfließende Bremsflüssigkeit vollständig verdrängt werden kann, sind die radialen Bohrungen 92 und die axialen Durchgangsbohrungen 96 zueinander derart angeordnet, daß sich bei jeder beliebigen Drehstellung des hülsenförmigen Strebenteils 54 relativ zum Gehäusemantel 18 bzw. zum Kolben 24 zumindest eine radiale Bohrung 92 und eine axiale Durchgangsbohrung 96 oberhalb einer durch die Mittellängsachse der Nachstellstrebe verlaufenden, horizontalen Bezugsebene H befinden. Des weiteren sind diese beiden Bohrungen 92 und 96 so angeordnet, daß das radial äußere Ende der Bohrung 92 bezüglich der Bezugsebene H unterhalb zumindest eines Teils der axialen Durchgangsbohrung 96 liegt. Dies bedeutet, daß bei jeder Drehstellung des hülsenförmigen Strebenteiles 54 jedenfalls ein Teil einer axialen Durchgangsbohrung 96 relativ zur Bezugsebene H höher liegt als das radial äußere Ende der relativ zur Bezugsebene H höchstgelegenen radialen Bohrung 92. In den Figuren 2 und 3 wird diese Tatsache durch die beiden Maße a und b veranschaulicht, wobei das Maß a bei jeder Drehstellung des hülsenförmigen Strebenteiles 54 kleiner als das Maß b sein muß. Auf diese Weise kann Luft, die sich in dem Hohlraum 90 befindet, beim Befüllen der Betätigungsvorrichtung 12 mit Bremsflüssigkeit immer aus dem Hohlraum 90 in den oberhalb der Bezugsebene H liegenden Teil der Zylinderbohrung 20 entweichen.

Gemäß Fig. 2 sind vier radiale Bohrungen 92 und sechs axiale Durchgangsbohrungen 96 vorhanden, die jeweils gleichmäßig in Umfangsrichtung voneinander beabstandet sind. Gemäß Fig. 3 sind lediglich drei radiale Bohrungen 92 und drei axiale Durchgangsbohrungen 96 vorhanden, die ebenfalls alle gleichmäßig in Umfangsrichtung verteilt sind.

Damit der Zufluß von Bremsflüssigkeit durch die Bohrungen 92 und 96 und die durch diese Bohrungen erfolgende Entlüftung ordnungsgemäß stattfinden, darf der freie Querschnitt dieser Bohrungen 92 und 96 nicht zu klein sein. Es hat sich als günstig herausgestellt, wenn der Zahlenwert des Verhältnisses des Volumens des Hohlraums 90 zur Querschnittsfläche jeder axialen Durchgangsbohrung 96 bzw. jeder radialen Bohrung 92 nicht größer als 1000 ist. Die Bohrungen 92 und 96 sind dann groß genug, um eine ausreichend rasche Befüllung der Betätigungsvorrichtung 12 mit Bremsflüssigkeit auch dann zu erlauben, wenn die Bremsflüssigkeit mit relativ geringem Druck zugeführt wird. Beträgt beispielsweise das Volumen des Hohlraums 90 800 mm³, dann sollte jede axiale Durchgangsbohrung 96 und jede radiale Bohrung 92 mindestens einen Öffnungsquerschnitt von 0,8 mm² aufweisen.

Zur weiteren Verbesserung der Strömungsverhältnisse innerhalb der Betätigungsvorrichtung 12 hat der Sicherungsring 74 einen runden Querschnitt. Des weiteren sind, um den Durchströmungswiderstand innerhalb der Betätigungsvorrichtung 12 gering zu halten, im Boden 84 des Federkäfigs 76 mehrere Durchgangsöffnungen 98 vorhanden.

## Patentansprüche

1. Betätigungsvorrichtung (12) mit selbsttätiger Nachstellung für eine hydraulische Fahrzeugscheibenbremse, mit
- einem Gehäuse (14), das einen Gehäuseboden (16) und einen Gehäusemantel (18) mit einer offenen Zylinderbohrung (20) aufweist,
- einem Kolben (24), der zum Betätigen der Bremse in der zylinderbohrung (20) hydraulisch verschiebbar ist, und
- einer mechanischen Betätigungseinrichtung zum Verschieben des Kolbens (24) in der Zylinderbohrung (20) und zum Ausgleich von Bremsbelagverschleiß, die eine axial in Bremsbetätigungsrichtung wirkende Spreizeinrichtung (34) und eine längeneinstellbare Strebe zwischen der Spreizeinrichtung (34) und dem Kolben (24) umfaßt, die gebildet ist durch ein erstes Strebenteil (52) mit einem bolzenförmigen Ende, das in ein zweites, im wesentlichen hülsenförmiges Strebenteil (54) geschraubt ist, welches mit einem konischen Flansch (68) am Kolben (24) anliegt, wobei zwischen dem bolzenförmigen Ende des Strebenteiles (52) und dem hülsenförmigen Strebenteil (54) ein mit Bremsflüssigkeit zu befüllender, einseitig flüssigkeitsdicht abgeschlossener Hohlraum (90) existiert,
**dadurch gekennzeichnet, daß** das hülsenförmige Strebenteil (54) im Bereich des Hohlraumes (90) mehrere radiale Bohrungen (92), die den Hohlraum (90) mit der Außenumfangsfläche des hülsenförmigen Strebenteiles (54) verbinden, und in dem konischen Flansch (68) mehrere axiale Durchgangsbohrungen (96) aufweist, die zueinander derart angeordnet sind, daß sich bei jeder beliebigen Drehstellung des hülsenförmigen Strebenteiles (54) relativ zum Gehäusemantel (18) zumindest eine radiale Bohrung (92) oberhalb einer durch die Mittellängsachse der längeneinstellbaren Strebe verlaufenden, horizontalen Bezugsebene (H) befindet, deren radial äußeres Bohrungsende unterhalb zumindest eines Teils wenigstens einer axialen Durchgangsbohrung (96) liegt.

2. Betätigungsvorrichtung nach Anspruch 1,
**dadurch gekennzeichnet, daß** wenigstens drei radiale Bohrungen (92) und drei axiale Durchgangsbohrungen (96) in dem hülsenförmigen Strebenteil (54) vorhanden sind.

3. Betätigungsvorrichtung nach Anspruch 1 oder 2,
**dadurch gekennzeichnet, daß** der Zahlenwert des Verhältnisses des Volumens des Hohlraumes (90) zur Querschnittsfläche jeder axialen Durchgangsbohrung (96) und der Zahlenwert des Verhältnisses des Volumens des Hohlraumes (90) zur Querschnittsfläche jeder radialen Bohrung (92) nicht größer als 1000 ist.

4. Betätigungsvorrichtung nach einem der Ansprüche 1 bis 3, mit einer sich axial zwischen einem Sicherungsring (74) und dem konischen Flansch (68) des hülsenförmigen Strebenteiles (54) abstützenden Federscheibenanordnung (72),
**dadurch gekennzeichnet, daß** der Sicherungsring (74) einen eine Fluidströmung in der Betätigungsvorrichtung möglichst wenig behindernden Querschnitt hat, beispielsweise einen runden Querschnitt.

5. Betätigungsvorrichtung nach einem der vorhergehenden Ansprüche, mit einer Rückstellfeder (82), die zwischen der Spreizeinrichtung (34) und einem näherungsweise topfförmigen Federkäfig (76) eingespannt ist und die Spreizeinrichtung (34) in ihre Ruhelage vorspannt,
**dadurch gekennzeichnet, daß** der Federkäfig (76) im Bereich seines Bodens (84) mehrere Durchgangsöffnungen (98) aufweist.

6. Fahrzeugscheibenbremse,
**gekennzeichnet durch** eine Betätigungsvorrichtung nach einem der Ansprüche 1 bis 5.

## Claims

1. Actuating apparatus (12) with automatic clearance adjustment for a vehicle hydraulic disk brake, having
- a housing (14) which comprises a housing base (16) and a housing shell (18) with an open cylinder bore (20),
- a piston (24) which for actuating the brake is hydraulically displaceable in the cylinder bore (20), and
- a mechanical actuating device for displacing the piston (24) in the cylinder bore (20) and for compensating brake lining wear, which device comprises an expanding device (34) acting axially in brake actuating direction and a length-adjustable strut disposed between the expanding device (34) and the piston (24), which strut is formed by a first strut part (52) with a bolt-shaped end, which is screwed into a second, substantially sleeve-shaped strut part (54), which rests with a conical flange (68) against the piston (24), wherein between the bolt-shaped end of the strut part (52) and the sleeve-shaped strut part (54) there is a cavity (90), which is to be filled with brake fluid and is closed off in a fluid-tight manner at one end,
**characterized in that** the sleeve-shaped strut part (54) has in the region of the cavity (90) a plurality of radial bores (92), which connect the cavity (90) to the outer peripheral surface of the sleeve-shaped strut part (54), and in the conical flange (68) a plurality of axial through-bores (96), which are disposed relative to one another in such a way that in any rotational position of the sleeve-shaped strut part (54) relative to the housing shell (18) at least one radial bore (92) is situated above a horizontal reference plane (H) extending through the longitudinal centre line of the length-adjustable strut and its radially outer bore end lies below at least one part of at least one axial through-bore (96).

2. Actuating apparatus according to claim 1,
**characterized in that** at least three radial bores (92) and three axial through-bores (96) are provided in the sleeve-shaped strut part (54).

3. Actuating apparatus according to claim 1 or 2,
**characterized in that** the numerical value of the ratio of the volume of the cavity (90) to the cross-sectional area of each axial through-bore (96) and the numerical value of the ratio of the volume of the cavity (90) to the cross-sectional area of each radial bore (92) is not greater than 1000.

4. Actuating apparatus according to one of claims 1 to 3, having a spring washer arrangement (72), which is supported axially between a retaining ring (74) and the conical flange (68) of the sleeve-shaped strut part (54),
**characterized in that** the retaining ring (74) has a cross section which impedes a fluid flow in the actuating apparatus as little as possible, e.g. a round cross section.

5. Actuating apparatus according to one of the preceding claims, having a restoring spring (82), which is clamped in between the expanding device (34) and an approximately pot-shaped spring cage (76) and biases the expanding device (34) into its normal position,
**characterized in that** the spring cage (76) has in the region of its base (84) a plurality of through-openings (98).

6. Vehicle disk brake,
**characterized by** an actuating apparatus according to one of claims 1 to 5.

## Revendications

1. Dispositif d'actionnement (12) à ajustage automatique, destiné à un frein à disque hydraulique de véhicule, avec
- un boîtier (14), qui présente un fond de boîtier (16) et une enveloppe de boîtier (18) avec un alésage de cylindre ouvert (20),
- un piston (24), qui peut coulisser de façon hydraulique dans l'alésage de cylindre (20) pour actionner le frein,
- un mécanisme d'actionnement pour faire coulisser le piston (24) dans l'alésage de cylindre (20) et pour compenser l'usure de la garniture de frein, qui comprend un dispositif d'expansion (34) agissant axialement dans le sens d'actionnement du frein et une entretoise réglable en longueur entre le dispositif d'expansion (34) et le piston (24), qui est formée par une première partie d'entretoise (52) avec une extrémité en forme de boulon qui est vissée dans une deuxième partie d'entretoise (54) sensiblement en forme de douille, qui s'appuie sur le piston (24) par une bride conique (68), dans lequel il existe entre l'extrémité en forme de boulon de la partie d'entretoise (52) et la partie d'entretoise (54) en forme de douille un espace creux (90) fermé d'un côté d'une façon étanche au liquide et qui doit être rempli avec du liquide de frein,
**caractérisé en ce que** la partie d'entretoise (54) en forme de douille présente dans la région de l'espace creux (90) plusieurs alésages radiaux (92), qui relient l'espace creux (90) à la surface périphérique extérieure de la partie d'entretoise (54) en forme de douille, et dans la bride conique (68) plusieurs alésages axiaux traversants (96), qui sont disposés les uns par rapport aux autres de telle façon que, pour toute position quelconque de rotation de la partie d'entretoise (54) en forme de douille par rapport à l'enveloppe de boîtier (18), au moins un alésage radial (92) se trouve au-dessus d'un plan de référence horizontal (H) passant par l'axe longitudinal central de l'entretoise réglable en longueur, alésage dont l'extrémité radialement extérieure est située en dessous d'au moins une partie d'un alésage axial traversant (96).

2. Dispositif d'actionnement selon la revendication 1, **caractérisé en ce qu'**il est prévu au moins trois alésages radiaux (92) et trois alésages axiaux traversants (96) dans la partie d'entretoise (54) en forme de douille.

3. Dispositif d'actionnement selon la revendication 1 ou 2, **caractérisé en ce que** la valeur chiffrée du rapport entre le volume de l'espace creux (90) et l'aire de la section transversale de chaque alésage axial traversant (96) et la valeur chiffrée du rapport entre le volume de l'espace creux (90) et l'aire de la section transversale de chaque alésage radial (92) n'est pas plus grand que 1000.

4. Dispositif d'actionnement selon l'une quelconque des revendications 1 à 3, avec un dispositif de disque à ressort (72) prenant appui axialement entre une bague de fixation (74) et la bride conique (68) de la partie d'entretoise (54) en forme de douille,
**caractérisé en ce que** la bague de fixation (74) a une section transversale entravant aussi peu que possible l'écoulement de fluide dans le dispositif d'actionnement, par exemple une section transversale ronde.

5. Dispositif d'actionnement selon l'une quelconque des revendications précédentes, avec un ressort de rappel (82), qui est tendu entre le dispositif d'expansion (34) et une cage de ressort (76) approximativement en forme de chapeau et qui, dans sa position de repos, précontraint le dispositif d'expansion (34),
**caractérisé en ce que** la cage de ressort (76) présente plusieurs ouvertures traversantes (98) dans la région de son fond (84).

6. Frein à disque de véhicule,
**caractérisé par** un dispositif d'actionnement selon l'une quelconque des revendications 1 à 5.
